# EUROPÄISCHE PATENTSCHRIFT

(11) **EP 1 362 900 B1**
(45) Veröffentlichungstag und Bekanntmachung des Hinweises auf die Patenterteilung: **27.07.2011**
(21) Anmeldenummer: 03008674.8
(22) Anmeldetag: 16.04.2003
(51) Int. Cl.: C09D 5/18, E04C 2/04, C04B 28/14, C09K 5/06

(54) **Flammenhemmende Ausrüstung von organischen Latentwärmespeichermaterialien enthaltenden Gegenständen**
Fire-retardant equipment for articles containing organic latent heat storage material
Equipment ignifuge pour les articles contenant des materiaux organiques d'accumulation de chaleur latente

(30) Priorität: 13.05.2002 DE 10221222
(43) Veröffentlichungstag der Anmeldung: 19.11.2003
(73) Patentinhaber: BASF SE, 67056 Ludwigshafen (DE)
(72) Erfinder: Jahns, Ekkehard, Dr., 69469 Weinheim (DE); Schmidt, Marco, 67346 Speyer (DE); Pakusch, Joachim, Dr., 67346 Speyer (DE); Seibert, Horst, 67136 Fussgönheim (DE)

(56) Entgegenhaltungen:
- DE-A1- 19 749 731
- DE-A1- 19 751 434
- DE-A1- 19 909 387
- DE-A1- 19 954 772
- US-A- 3 969 291
- US-A- 4 198 328
- US-A- 4 636 538
- US-B1- 6 197 415
- DATABASE WPI Section Ch, Week 199812 Derwent Publications Ltd., London, GB; Class A13, AN 1998-126352 XP002397425 & JP 10 007947 A (KANSAI PAINT CO LTD) 13. Januar 1998 (1998-01-13)
- DATABASE WPI Section Ch, Week 200260 Derwent Publications Ltd., London, GB; Class A93, AN 2002-560589 XP002397426 & JP 2002 114560 A (ASAHI KASEI KOGYO KK) 16. April 2002 (2002-04-16)
- DATABASE WPI Section Ch, Week 199904 Derwent Publications Ltd., London, GB; Class L02, AN 1999-040527 XP002397427 & JP 10 297950 A (MITSUBISHI PAPER MILLS LTD) 10. November 1998 (1998-11-10)

## Beschreibung

Die vorliegende Erfindung beschreibt die Verwendung von intumeszierenden Überzugsmassen zur flammenhemmenden Ausrüstung von Gegenständen aus Bindebaustoffen, die mikroverkapselte organische Latenwärmespeichermaterialien enthalten, sowie flammenhemmend ausgerüstete Gegenstände aus Bindebaustoffen, die mikroverkapselte organische Latentwärmespeichermaterialien enthalten.

Ein wichtiges Forschungsziel zur Senkung des Energiebedarfs und Nutzung vorhandener wärmeenergie sind Latentwärmespeicher. Sie finden vielfältige Verwendung beispielsweise als Wärmespeicher in Isolierstoffen oder Baustoffen sowie in Textilien. Ihre Funktionsweise beruht auf der beim fest/flüssig-Phasenübergang auftretenden Umwandlungsenthalpie, die eine Energieaufnahme oder Energieabgabe an die Umgebung bedeutet. Sie können damit einerseits zur Temperaturregelung in einem festgelegten Temperaturbereich verwendet werden und zum anderen in geeigneter Anordnung eine Verbesserung der wärmeisolation bewirken.

Die JP 2002 114560 lehrt Baumaterialien auf Gipsbasis enthaltend mikroverkapselte Latentwärmespeichermaterialien.

Latentwärmespeichermaterialien sind jedoch oftmals gut brennbare Paraffine. Diese Brennbarkeit ist je nach Anwendungsgebiet nicht akzeptabel, führt sie doch in der Regel zu einer höheren Brennbarkeit der Latentwärmespeichermaterialien enthaltenen Gegenstände. Als Beispiele seien Baustoffe genannt, da im Gebäudebau in der Regel hohe Anforderungen an den Flammschutz bestehen.

Es gibt die unterschiedlichsten versuche die Mikrokapseln flammbeständiger zu machen. Die US 5,435,376 beschreibt mikroverkapselte Latentwärmespeichermaterialien, die nicht brennbar sind - Die Speicherwärme solcher nicht brennbaren Latentwärmespeichermaterialien ist jedoch in der Regel zu gering. Die Schrift lehrt ferner Mischungen aus Latentwärmespeichermaterialien und Flammschutzmitteln als Kapselkern für Textilien, Schuhe, stiefel und Gebäudeisolierung. Diese Beimischung von Flammschutzmittel führt zu keiner bzw. nur geringfügiger Verbesserung der Brennwerte.

Die DE 197 49 731 lehrt mikroverkapselte Latentwärmespeichermaterialien sowie ihre Verwendung in Baumaterialien wie Gips oder Beton. Den als Kernmaterialien eingesetzten Kohlenwasserstoffen können Flammschutzmittel zugesetzt werden.

Die DE 199 54 772 lehrt mikroverkapselte Latentwärmespeichermaterialien mit einer Kapselhülle aus siliciumorganischen Polymeren, die eine geringere Brandlast aufweisen.

Die US 6,099,894, US 6,171,647 und 6,270,836 beschreiben eine Metalloxid-Gelbeschichtung von Mikrokapseln, die einen verbesserten Flammschutz der Kapseln bewirkt.

Ein verbesserter Flammschutz der eigentlichen Mikrokapseln, nutzt in den Fällen wenig, in denen die Kapseln mit anderen Materialien zusammen verarbeitet wurden. Es wurde beobachtet, dass bei Bränden von Mikrokapseln enthaltenden Gegenständen Flammschutzmittel als Beimischung zu den Latentwärmespeichermaterialien oder schützende Kapselbeschichtungen kaum einen Einfluss haben.

Die US 6,197,415 betrifft den Brandschutz von Gegenständen aus geschäumten Polymeren oder Geweben durch eine Gel-Beschichtung. Sie lehrt darüber hinaus, dass die zu schützenden Basismaterialien weitere ebenfalls brennbare Bestandteile wie mikroverkapselte Latentwärmespeichermaterialien enthalten können, die durch die Gel-Beschichtung ebenfalls geschützt werden.

Intumeszierende Überzugsmassen sind als flammenhemmende Ausrüstungen für Stahlkonstruktionen, Decken, Wände, Holz und Kabel bekannt.

Ihre wirkungsweise beruht auf der Bildung einer sich unter Hitzeeinwirkung bildenden, aufgeblähten, isolierenden Schicht aus schwer entflammbarem Material, die das Substrat vor Sauerstoffzutritt und/oder überhitzung schützt und dadurch die Entflammung von brennbaren Substraten verhindert oder verzögert.

Konventionelle Systeme bestehen aus einem filmbildenden Bindemittel, einem Kohlenstoffgerüstbildner, einem Treibmittel und einem Säurebildner als wesentlichen Komponenten.

Intumeszierende überzugsmasse mit spezieller Zusammensetzung werden beispielsweise in der DE-A-199 09 387 und der WO 99/27021 beschrieben.

Der vorliegenden Erfindung, lag nunmehr ein verbesserter Brandschutz für Gegenstände, die mikroverkapselte organische Latentwärmespeichermaterialien enthalten, als Aufgabe zugrunde.

Demgemäß wurde die Aufgabe durch die Verwendung von intumeszierenden Überzugsmassen zur flammenhemmenden Ausrüstung von Gegenständen aus Bindebaustoffen, die mikroverkapselte organische Latentwärmespeichermaterialien enthalten, gefunden.

Intumeszierende Überzugsmassen enthalten verschiedene aktive Bestandteile, die bei Temperaturanstieg im Falle eines Brandes Gas freisetzen und verkohlen. Das freigesetzte Gas führt zum Aufschäumen der Beschichtung, auf ein bis zu 80-faches ihres ursprünglichen Volumens. Das kohlenstoffhaltige Gerüst ist eine wärmebarriere und brennt selber erst bei Temperaturen oberhalb von 700°C. Zahlreiche intumeszierende Formulierungen sind aus dem "Fire Retardants Formulations Handbook" (Autor: Vijay Mohan Bhatnagar, 1972) bekannt.

Intumeszierende Überzugsmassen enthalten in der Regel Kohlenstoffgerüstbildner, Säurebildner, Treibmittel, filmbildende Bindemittel und gegebenenfalls übliche Hilfs- und Zusatzstoffe.

Der Wirkungsmechanismus intumeszierender Systeme bei Hitzeeinwirkung kann vereinfachend wie folgt beschrieben werden:
1. Bei einer Temperatur oberhalb von 70°C erweicht das Bindemittelsystem zu einer hochviskosen Schmelze.
2. Oberhalb etwa 90°C beginnt die Zersetzung von Treibmittel und Weichmacher unter Freisetzung nicht brennbarer Gase, die eine inerte Gasschicht über der Beschichtung bilden und eine Entflammung der brennbaren organischen Bestandteile der Beschichtung verhindern.
3. Der Säurebildner setzt oberhalb etwa 150°C Ammoniak frei, wodurch freie Säure zurückbleibt, die die Viskosität der Schmelze erniedrigt.
4. Der Kohlenstoffgerüstbildner schmilzt und reagiert mit der unter 3. freigesetzten Säure unter Wasserabspaltung und Carbonifizierung.
5. Das Treibmittel setzt sich unter Entwicklung inerter Gase und bläht die Schmelze zu einem weichen Schaum auf.
   Bei Temperaturen um 210°C laufen die Reaktionen 3., 4. und 5. simultan ab.
6. Durch teilweise Zersetzung geht der weiche Schaum in eine relativ starre Schicht über.
7. Die noch vorhandene Säure reagiert mit anwesendem Pigmentmaterial (Metalloxiden) unter Bildung von Phosphaten.
8. Die kohlenstoffhaltige Schutzschicht wird von der Flamme teilweise abgetragen, was die isolierende Wirkung verringert. Phosphor kann ebenfalls aus dem System entweichen, falls keine Metalloxide für eine Anfangsreaktion (7.) zur Verfügung stehen.
9. Je nach Zusammensetzung des Rückstandes können Phasenübergänge oder ein Schmelzen eintreten.

Kohlenstoffgerüstbildner sind Verbindungen, die zusammen mit der vom Säurebildner freigesetzten Säure zu Kohlenstoff zersetzt werden (Carbonifizierung). Solche Verbindungen sind beispielsweise Kohlenhydrate wie Mono-, Di- und Tripentaerythrit, Polykondensate des Pentaerythrit, Zucker, Stärke und Stärkederivate.

Säurebildner sind Verbindungen mit einem hohen Phosphorgehalt, die in der Wärme Phosphorsäure freisetzen. Solche Verbindungen sind beispielsweise Ammoniumpolyphosphate, Harnstoffphosphat und Diammoniumphosphat. Bevorzugt werden Polyphosphate, da sie den größten Anteil an aktivem Phosphor besitzen.

Treibmittel, die schaumbildenden Substanzen, setzen beim Zerfall nicht brennbares Gas frei. Treibmittel sind beispielsweise chlorierte Paraffine oder stickstoffhaltige Verbindungen wie Harnstoff, Dicyanamid, Guanidin oder kristallines Melamin. Es ist vorteilhaft Treibmittel unterschiedlicher Zersetzungstemperaturen zu verwenden, um so die Zeitspanne der Gasfreisetzung zu verlängern und damit die Schaumhöhe zu vergrößern.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB-A-2 007 689, EP-A-139 401 und US-A-3 969 291 beschrieben.

Die filmbildenden Bindemittel enthalten die oben genannten Komponenten. Unter Wärmeeinwirkung schmelzen sie, so dass die Intumeszenzreakion in der flüssigen Phase stattfinden kann. Filmbildende Bindemittel sind beispielsweise Homopolymerisate auf Basis Vinylacetat, Copolymerisate auf Basis Vinylacetat, Ethylen und Vinylchlorid, Copolymerisate auf Basis Vinylacetat und dem Vinylester einer langkettigen, verzweigten Carbonsäure, Copolymerisate auf Basis Vinylacetat und Maleinsäure-di-n-Butylester, Copolymerisate auf Basis Vinylacetat und Acrylsäureester, Copolymerisate auf Basis Styrol und Acrylsäureester und/oder Copolymerisate auf Basis Acrylsäureester, Vinyltoluol/Acrylat-Copolymer, Styrol/Acrylat-Copolymer, Vinyl/Acrylat-Copolymer und selbstvernetzende Polyurethan-Dispersionen.

Übliche Hilfs- und Zusatzstoffe sind beispielsweise Additive, die die Eigenschaften des Schaumes verbessern. Beispiele für solche Additive sind Zinkborat, Aluminiumtrihydrat und Antimonoxid. Darüberhinaus können die Überzugsmassen mit Titandioxid, Molybdenoxid und/oder Zirkonoxid pigmentiert sein, die zusätzlich wärmeisolierend wirken. Zur verbesserten Anwendung können die Überzugsmassen auch geeignete Weichmacher oder Thixotropierungsmittel enthalten. Hilfsmittel können ferner Füllstoffe wie Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen sein.

Intumeszierende Überzugsmassen verschiedenster Zusammensetzungen sind im Handel erhältlich und zur erfindungsgemäßen Verwendung geeignet. Beispielhaft seien die Produkte der Firma Permatex Protective Coatings, Vaihingen/Enz genannt.

Das Aufbringen der Überzugsmasse kann auf jede herkömmliche Art und Weise erfolgen, z.B. durch Sprühen, Tauchen, Ziehen oder Streichen. Bevorzugt werden sie in Form eines streich-, spritzoder rollfähigen Anstrichmittels eingesetzt. In der Regel wird ein 0,1-3 mm dicker Film aufgetragen (Trockenschichtdicke).

Je nach filmbildendem Bindemittel kann man verschiedene Klassen von intumeszierenden Überzugsmassen unterscheiden:
- Chlorierte Gummi-Überzugsmassen basieren auf chloriertem Gummi als Bindemittel, Glasfasern und Melaminphosphat als säurefreisetzenden Katalysator und Treibmittel;
- wasserbasierende Latex-Überzugsmassen enthalten Polyvinylacetat Latex zusammen mit Pentaerythrit, Dicyandiamid, Carboxymethylcellulose, Titandioxid, Melaminphosphat und/oder Ammoniumpolyphosphat. Einige Formulierungen enthalten Ethylen/Vinylacetat oder Acrylnitril/Vinylacetat Latex neben Melaminpolyphosphat und/oder Ammoniumpolyphosphat;
- Vinyl-Überzugsmassen enthalten in der Regel eine Kombination eines Copolymers oder Terpolymers aus Vinylchlorid oder Vinylidenchlorid und Melaminphosphate. Vorteilhaft ist der Zusatz von p,p'-Oxybisbenzolsulfonamid und/oder Melaminpolyphosphat, die die Kohle verbessern und die Flammausbreitung herabsetzen;
- Epoxy-Überzugsmassen enthalten Diglycidylbisphenol-A-epoxid, Melaminpyrophosphat, Dicyandiamid, Harnstoff und Borax. Eine typische Formulierung enthält Chloralkylphosphatester, Ammoniumpolyphosphat und/oder Melaminpyrophosphat, Melamin, ein Pentaerythrit, Tonerverdicker, Zinkborat und andere Zinkverbindungen, mineralische Fasern und ein Epoxiharz;
- Aminoharz-Überzugsmassen enthalten Melaminformaldehyd- oder Harnstoffformaldehydharz, Natriumcarbonat, Alkalisilikat, Melaminphosphat und Polyphosphat.

Die intumeszierenden Überzugsmassen werden erfindungsgemäß zur flammenhemmenden Ausrüstung von Gegenständen aus Bindebaustoffen, die mikroverkapselte organische Latentwärmespeichermaterialien enthalten, verwendet.

Diese Gegenstände können Formkörper, die als solche die mikroverkapselten organischen Latentwärmespeichermaterialien enthalten, sowie konventionelle Formkörper, die eine Beschichtung aufweisen, die die Mikrokapseln enthält, sein.

Die intumeszierenden Überzugsmassen werden zur Ausrüstung von Gegenständen aus Bindebaustoffen verwendet. Bindebaustoffe enthalten mineralische, silikatische oder polymere Bindemittel. Formkörper mit mineralischen Bindemitteln, enthalten neben dem Bindemittel, Wasser, Zuschläge wie Kies, Sand, Glas oder Mineralfasern, sowie gegebenenfalls Hilfsmittel. Mineralische Bindemittel sind allgemein bekannt. Es handelt sich um feinteilige anorganische Stoffe wie Kalk, Gips, Ton, Lehm und zement, die durch Anrühren mit wasser in ihre gebrauchsfertige Form, überführt werden und sich beim Trocknen als Funktion der Zeit, gegebenenfalls unter erhöhter Temperatur verfestigen. In typischer weise enthalten die Trockenzusammensetzungen mineralischer Bindebaustoffe, bezogen auf die Menge an mineralischem Bindemittel 5 bis 50 Gew.-% mikroverkapselte Latentwärmespeichermaterialien.

Bevorzugt werden die intumeszierenden Überzugsmassen bei Gegenständen eingesetzt, die Gips als Bindebaustoff enthalten.

Vorzugsweise handelt es sich um Gips enthaltende Formkörper wie Gipskartonplatten oder konventionelle Gegenstände wie Wände oder Decken, die einen Gipsputz als Beschichtung haben. Bevorzugt handelt es sich um Gipskartonplatten. Mikroverkapselte Latentwärmespeichermaterialien enthaltende Gipskartonplatten werden in der älteren deutschen Patentanmeldung 101 39 171.4 beschrieben, auf die ausdrücklich verwiesen sei.

Gipskartonplatten können 5 bis 40 Gew.-%, insbesondere 20 bis 35 Gew.-%, Mikrokapseln bezogen auf das Gesamtgewicht der Gipskartonplatte (Trockensubstanz) eingearbeitet haben. Die Herstellung von Gipskartonplatten ist allgemein bekannt.

Gipskartonplatten bestehen in der Regel aus einem Gipskern mit beidseitig angebrachten Kartonblättern. Sie werden üblicherweise in der Art hergestellt, dass wässriger Gipsbrei diskontinuierlich oder kontinuierlich zwischen zwei Kartonblätter auf Cellulosebasis gebracht wird, wobei Platten geformt werden. Der Gipsbrei wird, wie allgemein bekannt, durch kontinuierliche Zugabe und ständigem Mischen von β-Hemihydratcalciumsulfat in Wasser mit Additiven hergestellt. Die Mikrokapseln können sowohl zusammen mit dem Calciumsulfat dosiert werden, wie auch bereits als wässrige Dispersion vorliegen. Der so erhaltene Gipsbrei wird auf die Kartonblätter aufgetragen und mit Karton abgedeckt.

Während der beginnenden Aushärtung werden die Kartonplatten in einer Presse zu Streifen mit beispielsweise 1,2 - 1,25 m Breite und 9,25, 12,5, 15,0, 18,0 oder 25 mm Dicke geformt. Diese Streifen härten innerhalb weniger Minuten aus und werden in Platten geschnitten. In diesem Stadium enthalten die Platten in der Regel noch ein Drittel ihres Gewichtes als freies Wasser. Um das Restwasser zu entfernen werden die Platten einer Wärmebehandlung bei Temperaturen von etwa 250°C unterworfen. Die so erhaltenen Gipskartonplatten haben eine Dichte von 750 - 950 kg/m³.

Für Gipskartonplatten wird üblicherweise Karton mit einem Gewicht von ca. 300 g/m² eingesetzt.

Anstelle von Karton aus Cellulosebasis können auch alternative, faserartige Gebilde als beidseitige Abdeckungen der erfindungsgemäßen Gipskartonplatten verwendet werden. Alternative Materialien sind Polymerfasern aus z.B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden.

Derartige Gipskartonplatten sind beispielsweise aus der US 4,810,569, US 4,195,110 und US 4,394,411 bekannt.

Eine erhöhte Haftfestigkeit des Gips auf Untergründen wie Karton kann, wie dem Fachmann bekannt, durch Zusatz natürlicher und/oder synthetischer Polymere erzielt werden.

Die intumeszierenden Überzugsmassen können ferner bevorzugt zur Ausrüstung von Beschichtungsmassen für konventionelle Formkörper eingesetzt werden. Diese Beschichtungsmassen können neben den mikroverkapselten Latentwärmespeichern die oben erwähnten Bindebaustoffe wie mineralische, silikatische oder polymere Bindemittel sowie gegebenenfalls Füllstoffe enthalten.

Ferner können die mineralischen Formkörper geschäumt sein.

Mikroverkapselte Latentwärmespeichermaterialien sind Teilchen mit einem Kapselkern bestehend überwiegend, zu mehr als 95 Gew.-%, aus organischen Latentwärmespeichermaterialien und einem Polymer als Kapselwand. Der Kapselkern ist dabei je nach der Temperatur fest oder flüssig. Die mittlere Teilchengröße der Kapseln beträgt 0,5 bis 100 µm, bevorzugt 1 bis 80 µm insbesondere 1 bis 50 µm.

Latentwärmespeichermaterialien sind organische lipophile Substanzen, die ihren fest/flüssig Phasenübergang im Temperaturbereich von -20 bis 120°C haben.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Weiterhin ist es vorteilhaft, den kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120°C höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen.

Je nach Temperaturbereich, in dem die Wärmespeichereigenschaft gewünscht ist, werden die lipophilen Substanzen gewählt. Beispielsweise verwendet man für Wärmespeicher in Baustoffen in Europa bevorzugt lipophile Substanzen, deren fest/flüssig-Phasen-übergang im Temperaturbereich von 0 bis 60°C liegt. So wählt man in der Regel für Außenanwendungen Einzelstoffe oder Mischungen mit Umwandlungstemperaturen von 0 bis 25°C und für Innenraumanwendungen von 15 bis 30°C. Bei Solaranwendungen in Verbindung mit Baustoffen als Speichermedium oder zur Überhitzungsvermeidung von transparenter Wärmedämmung, wie in der EP-A 333 145 beschrieben, sind vor allem Umwandlungstemperaturen von 30 bis 60°C geeignet. Vorteilhaft ist beispielsweise die Verwendung von Alkangemischen, wie sie als technisches Destillat anfallen und als solches handelsüblich sind. Bevorzugt werden Latentwärmespeichermaterialien, die im wesentlichen aus n-Alkanen bestehen.

Als Polymer für die Kapselwand können prinzipiell die für die Mikrokapseln für Durchschreibepapiere bekannten Materialien verwendet werden. So ist es beispielsweise möglich die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise Formaldehydharze, Polyharnstoffe und Polyurethane sowie hochvernetzte Methacrylsäureesterpolymere.

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkylinsbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymere ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4,021,595, EP-A 0 392 876 und EP-A 0 535 384 bekannt.

Bevorzugt werden als Kapselwände Polymere auf Basis von einem oder mehreren C₁-C₂₄-Alkylestern der Acryl- und/oder Methacrylsäure.

Bevorzugt werden Mikrokapseln, deren Kapselwand ein hochvernetztes Methacrylsäureesterpolymer ist. Der Vernetzungsgrad wird dabei mit einem Vernetzeranteil ≥ 10 Gew.-% bezogen auf das Gesamtpolymer erzielt.

Die bevorzugten Mikrokapseln werden aus 30 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Mikrokapseln aus bis zu 80 Gew.-%, vorzugsweise aus 5 bis 60 Gew.-%, insbesondere aus 10 bis 50 Gew.-%, eines bi- oder polyfunktionellen Monomeren als Monomere II, welche in Wasser nicht löslich oder schwer löslich sind und aus bis zu 40 Gew.-%, vorzugsweise bis zu 30 Gew.-% sonstiger Monomere III mit aufgebaut sein.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butylund tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens 2 nichtkonjugierte ethylenische Doppelbindungen haben.

Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, α-Methylstyrol, β-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Die zur erfindungsgemäßen Verwendung geeigneten Mikrokapseln lassen sich durch eine sogenannte in-situ-Polymerisation herstellen.

Die bevorzugten Mikrokapseln sowie ihre Herstellung sind aus der EP-A-457 154 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Der Anteil der Ölphase in der Öl-in-Wasser-Emulsion liegt vorzugsweise bei 20 bis 60 Gew.-%.

Anschließend löst man die Polymerisation der Monomeren durch Erwärmung aus, wobei die entstehenden Polymere die Kapselwand bilden, welche die lipophile Substanz umschließt.

Auch die Schutzkolloide sind aus der EP-A-457 154 bekannt. Ferner sind die wie Schutzkolloide wirkenden anorganischen festen Teilchen, sogenannte Pickering-Systeme geeignet, die ebenfalls in der EP-A-457 154 sowie der älteren deutschen Anmeldung 101 63 162.6 beschrieben werden, auf die ausdrücklich verwiesen sei. Man erhält Kapseln mit einer Kapselgröße von 0,5 bis 100 µm, bevorzugt 1 bis 50 µm, je nach der im Emulgierschritt gewählten Größe. Die Kapseln haben dabei eine enge Größenverteilung.

Die auf diese Weise erhaltenen mikroverkapselten Latenwärmespeichermaterialien können direkt als Dispersion oder nach Sprühtrocknung als Kapselpulver für die Gegenstände verarbeitet werden.

Die erfindungsgemäß mit den intumeszierenden Überzugsmassen ausgerüsteten Gegenstände zeichnen sich durch eine schlechte Entflammbarkeit aus.

Die nachfolgenden Beispiele sollen die erfindungsgemäße Verwendung erläutern:

### Beispiel 1

a) Es wurde eine einfache intumeszierende Überzugsmasse aus folgenden Bestandteilen hergestellt:

| | |
|---|---|
| 20 g | Wasser |
| 30 g | Exolit® AP (Ammoniumpolyphosphat der Fa. Clariant) als Säurebildner |
| 10 g | kristallines Melamin als Treibmittel |
| 10 g | Pentaerythrit als Kohlenstoffgerüstbildner |
| 20 g | Acronal® 290D (50 gew.-%ige Styrolacrylat-Polymerdispersion, BASF) als filmbildendes Bindemittel. |

b) Herstellung der mikroverkapselten Latentwärmespeicher:

| Wasserphase: | |
|---|---|
| 572 g | Wasser |
| 80 g | einer 50 gew.-%igen kolloidalen Dispersion von SiO₂ in Wasser bei pH 9,3 (Z-mittlere Teilchengröße 108,6 nm, nach Lichtstreuung) |
| 2,1 g | einer 2,5 gew.-%igen wässrigen Natriumnitritlösung |
| 20 g | Methylcellulose, 1 gew.-%ige wässrige Lösung (Viskosität 15000 mPas bei 2 % in Wasser) |

| Ölphase: | |
|---|---|
| 440 g | C₁₈-C₂₀-Alkan (techn. Destillat) |
| 77 g | Methylmethacrylat |
| 33 g | Butandioldiacrylat |
| 0,76 g | Ethylhexylthioglykolat |
| 1,35 g | t-Butylperpivalat |

- Zulauf 1:: 1,09 g t-Butylhydroperoxid, 70 gew.-%ig in Wasser
- Zulauf 2:: 0,34 g Ascorbinsäure, 0,024 g NaOH, 56 g H₂O
Bei Raumtemperatur wurde die obige Wasserphase vorgelegt und mit 3 g 10%iger Salpetersäure auf pH 4 gestellt. Nach Zugabe der Ölphase wurde mit einem schnelllaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrührer in 4 Minuten auf 56°C aufgeheizt, innerhalb von weiteren 20 Minuten auf 58°C, innerhalb von weiteren 60 Minuten auf 71°C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten zudosiert. Anschließend wurde abgekühlt. Die entstandene Mikrokapseldispersion besaß einen Feststoffgehalt von 46,8 % und eine mittlere Teilchengröße D(4,3) = 9,5 µm (gemessen mit Fraunhoferbeugung, Volumenmittelwert). Die Dispersion wurde in einem Laborsprühtrockner mit Zweistoffdüse und Zyklonabscheidung mit 130°C Eingangstemperatur des Heizgases und 70°C Ausgangstemperatur des Pulvers aus dem Sprühturm getrocknet.
c) Eine Gipsplatte wurde aus 70 Gewichtsteilen Stuckgips, 30 Gewichtsteilen der unter b) hergestellten mikroverkapselte Latentwärmespeicher und 60 Gewichtsteilen Wasser hergestellt und 14 Tage an der Luft getrocknet.

Eine solche Gipsplatte mit den Maßen 10x20x1,2 cm wurde von allen Seiten mit der unter a) hergestellten intumeszierenden Überzugsmasse mit ca. 200 µm Naßfilmdicke eingestrichen. Die Beschichtung wurde 2 Tage an der Luft getrocknet.

Die beschichtete Gipsplatte wurde fünf Minuten in eine Bunsenbrennerflamme gehalten und beurteilt. Im Bereich der Flamme bildete sich aus der intumeszierenden Beschichtung ein Kohleschaum, der die weitere Erwärmung der Gipsplatte verringerte. Die Platte rauchte zwar im Feuer und der Kohleschaum glühte, doch sie brannte nicht sichtbar. Eine Brandausbreitung nach oben fand nicht statt. Nach Löschen der Brennerflamme verlosch auch die Platte nach wenigen Sekunden.

### Vergleichsbeispiel

Eine Gipsplatte (10x20x1,2 cm) mit mikroverkapselten Latentwärmespeichern nach Beispiel 1 jedoch ohne intumeszierende Überzugsmasse wurde ebenfalls 5 Minuten in eine Bunsenbrennerflamme gehalten und beurteilt. Die Platte zeigte eine deutliche Brandausbreitung nach oben, wobei im wesentlichen das aus der Platte freigesetzte Gas vor der Platte brannte. Die Platte zerfiel nicht. Nach dem Löschen der Brennerflamme brannte die Platte weiter, die Flamme verlosch nicht von selbst.

### Beispiel 2

Eine Gipsplatte (10x20x1,2 cm) mit mikroverkapselten Latentwärmespeichern nach Beispiel 1 wurde von allen Seiten mit einer kommerziellen Brandschutzdispersion für Holz (Unitherm® 87537, Permatex GmbH, Vaihingen/Enz) mit ca. 200 µm Naßfilmdicke eingestrichen. Die Beschichtung wurde 2 Tage an der Luft getrocknet.

Die beschichtete Gipsplatte wurde fünf Minuten in eine Bunsenbrennerflamme gehalten und beurteilt. Im Bereich der Flamme bildete sich aus der intumeszierenden Beschichtung ein Kohleschaum von ca. 4 mm Dicke, der die weitere Erwärmung der Gipsplatte verringerte. Die Platte rauchte zwar im Feuer und der Kohleschaum glühte, sie brannte aber nicht sichtbar. Eine Brandausbreitung nach oben fand nicht statt. Nach Löschen der Brennerflamme verlosch auch die Platte nach wenigen Sekunden.

## Patentansprüche

1. Verwendung von intumeszierenden Überzugsmassen zur flamunenhemmenden Ausrüstung von Gegenständen aus Bindebaustoffen, die mikroverkapselte organische Latenwärmespeichermaterialien enthalten.

2. Verwendung nach Anspruch 1, **dadurch gekennzeichnet, dass** die Überzugsmasse, Kohlenstoffgerüstbildner, Säurebildner, Treibmittel und filmbildende Bindemittel enthält.

3. Verwendung nach einem der Ansprüche 1 bis 2, zur Ausrüstung von Gegenständen die Gips enthalten.

4. Verwendung nach einem der Ansprüche 1 bis 3, **dadurch gekennzeichnet, dass** die Latentwärmespeichermaterialien im wesentlichen aus n-Alkanen bestehen.

5. verwendung nach einem der Ansprüche 1 bis 4, **dadurch gekennzeichnet, dass** die mikroverkapselten Latentwärmespeichermaterialien Kapselwände aus Polymeren auf Basis von einem oder mehreren C₁-C₂₄-Alkylestern der Acryl- und/oder Methacrylsäure haben.

6. Flammenhemmend mit einer intumeszierenden überzugsmasse ausgerüstete Gegenstände aus Bindebaustoffen, die mikroverkapselte organische zatentwärmespeichermaterialien enthalten gemäß den Ansprüchen 1 bis 5.

## Claims

1. The use of intumescent coating materials for the flame-inhibiting finishing of articles made from binding building materials which comprise microencapsulated organic latent-heat storage materials.

2. The use according to claim 1, wherein the coating material comprises char formers, acid formers, blowing agents and film-forming binders.

3. The use according to either of claims 1 and 2 for the finishing of articles comprising gypsum.

4. The use according to any one of claims 1 to 3, wherein the latent-heat storage materials essentially consist of n-alkanes.

5. The use according to any one of claims 1 to 4, wherein the microencapsulated latent-heat storage materials have capsule walls comprising polymers based on one or more C₁-C₂₄-alkyl esters of acrylic and/or methacrylic acid.

6. An article made from binding building materials provided with a flame-inhibiting finish of an intumescent coating material and comprising microencapsulated organic latent-heat storage materials according to any one of claims 1 to 5.

## Revendications

1. Utilisation de masses de recouvrement intumescentes pour l'apprêt ignifuge d'objets en matériaux de construction liants qui contiennent des matériaux latents accumulateurs de chaleur organiques micro-encapsulés.

2. Utilisation selon la revendication 1, **caractérisée en ce que** la masse de recouvrement contient des agents de formation de structure carbonés, des agents de formation d'acide, des agents gonflants et des liants formant un film.

3. Utilisation selon l'une quelconque des revendications 1 à 2 pour l'apprêt d'objets qui contiennent du gypse.

4. Utilisation selon l'une quelconque des revendications 1 à 3, **caractérisée en ce que** les matériaux latents d'accumulation de la chaleur sont essentiellement constitués de n-alcanes.

5. Utilisation selon l'une quelconque des revendications 1 à 4, **caractérisée en ce que** les matériaux latents d'accumulation de la chaleur micro-encapsulés présentent des parois de capsule en polymères à base d'un ou de plusieurs esters alkyliques en C₁-C₂₄ de l'acide acrylique et/ou méthacrylique.

6. Objets apprêtés de manière ignifuge avec une masse de recouvrement intumescente en matériaux de construction liants, qui contiennent des matériaux latents accumulateurs de chaleur organiques micro-encapsulés selon les revendications 1 à 5.
